# EUROPEAN PATENT APPLICATION

(11) **EP 2 076 004 A1**
(43) Date of publication of application: **01.07.2009**
(21) Application number: 07025142.6
(22) Date of filing: 27.12.2007
(51) Int. Cl.: H04M 15/00, H04L 12/14

(54) **Method for online charging**

(71) Applicant: Nokia Siemens Networks Oy, 02610 Espoo (FI)
(72) Inventor: The designation of the inventor has not yet been filed
(74) Representative: Weidel, Gottfried

(57) **Abstract**

It is provided a method for online charging, especially in a mobile telecommunication network, comprising: enabling the charging for a service or a product by a S-CSCF, which comprise a user profile, especially initial filter criteria, adapting the user profile, especially the initial filter criteria, according to a change of the tariff and a system for online charging, especially in a mobile telecommunication network, comprising: means for enabling the charging for a service or a product by a S-CSCF, which comprises an user profile, especially initial filter criteria, means for adapting the user profile, especially the initial filter criteria.

## Description

### Field of the Invention

The present invention relates to a method for online charging, especially in a mobile telecommunication network and a system for online charging, especially in a mobile telecommunication network, and an initial filter adapter, which is suitable to adapt the user profile, especially the initial filter criteria.

### Background of the Invention

The German patent application 10 2006 051 169.7 shows a method for an initial self-configuration of accounting components (i.e. network measurement units), the so-called charging trigger functions. The CTFs (for example 3GPP TS 32.240), defined by the 3GPP, will be amended by additional features and will be referred to as next-generation CTFs (ngCTFs).

### Summary of the Invention

Because of the special features of the IMS online charging regarding the functional groups S-CSCF and IMS-GWF (see 3GPP TS 32.260) a direct application of the self-management and self-configuration concepts as defined in the German patent application 10 2006 051 169.7 is not possible for IMS online charging..

The reason is that the IMS-GWF as IMS online charging CTF will only be in the SIP signalling path and consequently can only have a credit control-dialogue with the (online) charging system, if this is explicitly laid down in the initial filter criteria, which are part of user profile (initial filter criteria are installed in the S-CSCF assigned to the respective user during IMS registration). Otherwise chargeable events cannot be detected by the IMS-GWF, because the relevant SIP signalling does not pass these nodes.

Simply enhancing the IMS-GWF (as a 3GPP CTF) to a ngCTF according to German patent application 10 2006 051 169.7 is not sufficient for an integration in a self-configuring charging-system. Rather, the corresponding S-CSCF has to be amended with corresponding rules, such that the relevant SIP signalling is routed via the IMS-GWF, which is capable of having a credit control-dialogue with the online charging-system, while the S-CSCF is not.

Therefore, there is a need for a method that allows the IMS-GWF's (defined in TS 32.260) being included in the SIP signalling (for example SIP REGISTER or SIP INVITE messages, as well as subsequent communications within the same SIP session) path in order to realise online charging.

The invention provides a method for online charging, especially in a mobile telecommunication network, comprising: enabling the charging for a service or a product by a S-CSCF, which comprise a user profile, especially initial filter criteria, adapting the user profile, especially the initial filter criteria, according to a change of the tariff.

The invention provides also a method for online charging, especially in a mobile telecommunication network, comprising: enabling the charging for a service or a product by a S-CSCF, whereas a home subscriber server (HSS) comprises a user profile, especially initial filter criteria, adapting the user profile, especially the initial filter criteria, according to a change of the tariff.

Further, the invention provides a system for online charging, especially in a mobile telecommunication network, comprising: means for enabling the charging for a service or a product by a S-CSCF, which comprises an user profile, especially initial filter criteria, means for adapting the user profile, especially the initial filter criteria.

Further, the invention provides also a system for online charging, especially in a mobile telecommunication network, comprising: means for enabling the charging for a service or a product by a S-CSCF, a home subscriber server (HSS), which comprises a user profile, especially initial filter criteria, means for adapting the user profile, especially the initial filter criteria.

Furthermore, the invention provides an initial filter adapter, which is suitable to adapt the user profile, especially the initial filter criteria and is suitable to be used in one of the systems according to claims 5 to 9.

Further embodiments are incorporated in the dependent claims.

According to an exemplary embodiment a method comprises: checking the user profile, especially the initial filter criteria.

According to an exemplary embodiment a method comprises: changing the initial filter criteria, making the initial filter criteria more restrictive or less restrictive, in order to prevent useless messages in the network or to enable transmitting of further messages.

According to an exemplary embodiment a system comprises: means for checking the user profile, especially the initial filter criteria.

According to an exemplary embodiment a system is provided, whereas the means for adapting are suitable to change the initial filter criteria, making the initial filter criteria more restrictive or less restrictive, in order to prevent useless messages in the network or to enable transmitting of further messages.

According to an exemplary embodiment a system is provided, whereas the means for adapting comprise an interface to an accounting component, especially ngCTF (self-configuration enhanced IMS-GWF), or an S-CSCF, respectively.

It may be seen as a gist of the present invention to provide a method for online charging, especially in a mobile telecommunication network, comprising: enabling the charging for a service or a product by a S-CSCF, which comprise a user profile, especially initial filter criteria, adapting the user profile, especially the initial filter criteria, according to a change of the tariff and a system for online charging, especially in a mobile telecommunication network, comprising: means for enabling the charging for a service or a product by a S-CSCF, which comprises an user profile, especially initial filter criteria, means for adapting the user profile, especially the initial filter criteria.

It should be noted that the above features may also be combined. The combination of the above features may also lead to synergetic effects, even if not explicitly described in detail.

These and other aspects of the present invention will become apparent from and elucidated with reference to the embodiments described hereinafter.

It should be noted that the following described exemplary embodiments of the invention apply also for the method, the device, the programme element and the computer readable medium.

### Brief Description of the Drawings

Exemplary embodiments of the present invention will be described in the following with reference to the following drawings.
Fig. 1. shows the self-deployment principle
Fig. 2. shows the IMS-Online charging architecture
Fig. 3. shows the IFC-Adapter

### Detailed Description of Exemplary Embodiments

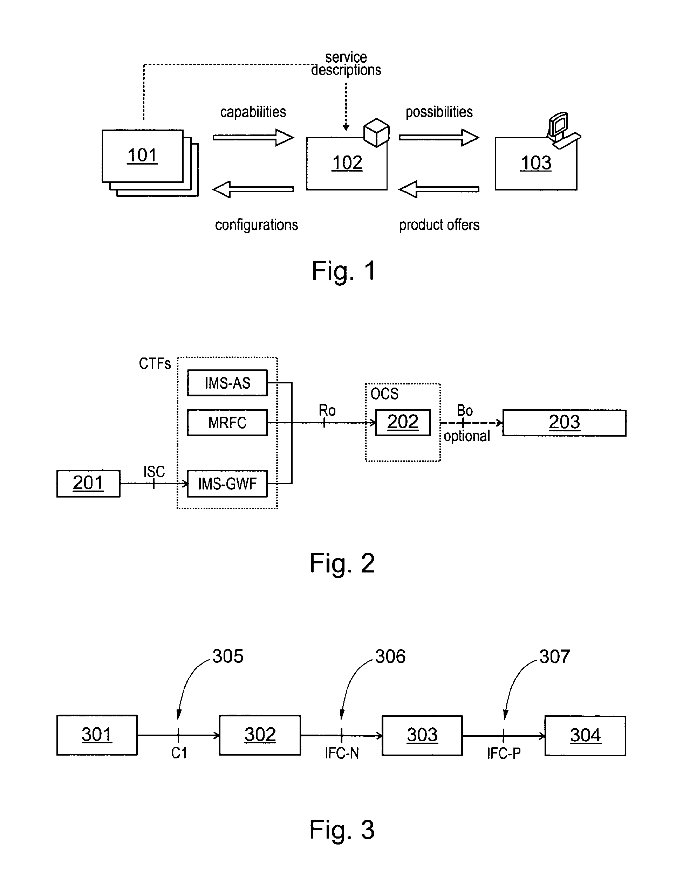

Fig. 1. depicts the self-deployment principle, whereas there is the charging trigger functions 101, the configuration manager 102 and the product offer generation 103. As a first step, the concept extends the functionality of all types of CTFs present in such networks by a general configuration capability. This means, that when such an extended CTF, that is called a next-generation CTF (ngCTF) is switched on in a network and has identified its charging system, it sends its so-called charging capabilities to the configuration manager. These capabilities describe what customer-related events or activities utilizing or consuming resources (chargeable events) of the corresponding network or service element can be recognised and what information can be reported for each event.

Furthermore, the capabilities list how reporting can take place, i.e. what protocols and charging mechanisms (online, offline) the ngCTF supports.

Besides, an ngCTF may also provide a configuration manager with the so-called service descriptions, describing the respectively provided service from a charging point of view. This means, that they state by which events or activities a service usage can be recognized. As an alternative, such descriptions may also be manually provided by the operator.

Based on the charging capabilities and the service descriptions, the configuration manager is capable of deriving for each service which charging possibilities exist, i.e. for which chargeable events that characterize the service, there exists an ngCTF that is able to report this chargeable event.

The sum of all such charging possibilities determines the services which the operator can offer as charged services to his subscribers. Such offered services are called product offers.

As certain chargeable events need to be captured by the involved ngCTFs to charge and build the consuming subscribers correctly, each product offer leads to an information demand that needs to be satisfied by the available ngCTFs. The configuration manager therefore derives so-called charging configurations for each involved ngCTF instructing them which events to capture, what information to report and how reporting shall take place. This completes the initial self-configuration of the charging infrastructure.

By the described self-configuration mechanism, both self-deployment of ngCTFs as well as easy changes by consequent automatic updates of the configuration become possible. The operator's product offer generation 103 and tariff choice is only restricted by the ngCTFs capabilities to provide the necessary information. The charging configurations derived by the configuration manager always adapt the ngCTF's reporting behaviour according to the introduced changes (for example: change product offer, new ngCTFs becoming available, etc.). This keeps the correlation effort minimal and ensures the availability of all required information for the subsequent charging and billing processes.

Fig. 2. depicts the IMS-Online charging architecture, whereas there is the S-CSCF 201, the OCF 202 and the billing domain 203. The number of functional entities that may take the role of an online enhanced CTF and therefore can participate in the online charging process is reduced to a total of three: the S-CSCF 201, the MRFC and the IMS-AS. However, the S-CSCF 201 does not really obtain online enhancements. Rather, it employs a special gateway for credit-control interactions with the OCS as shown in Fig. 3. This IMS gateway function (IMS-GWF) acts as online CTF regarding the OCS, but for the S-CSCF it is an application server with which it interacts using SIP. By the IMS-GWFs translating between SIP service control and diameter credit-control, online charging becomes transparent to the S-CSCF 201 and is invoked like any other service over the ISC (IMS service control) reference point, i.e. by defining user-specific initial filter criteria that specify when to invoke the respective services. There is options to a stand-alone solution, the IMS-GWF may also be integrated into either the S-CSCF 201 or the OCS; in these cases the respective reference point, i.e. ISW or Ro, is not used.

The above-mentioned initial filter criteria are defined in the HSS as part of the user profile that is provided to the assigned S-CSCF 201 during user registration. They allow to define which IMS-AS to forward the considered SIP message to, based on the occurrence of certain triggers in the message like the requested URI, the SIP method, any SIP header field, the session case (originating/terminating, registered/unregistered) as well as session description information, i.e. any SDP field in the considered SIP messages body. Filter criteria have a priority assigned to them, such that the order in which they are evaluated can be determined. But as the name implies, initial filter criteria are only evaluated for initial requests, such as SIP invite or a SIP message. However, as described above, possible triggering SIP messages are not always initial events, but subsequent SIP messages, like a SIP 200 OK that signals the successful establishment of the PS voice call, for instance. The solution to this question is quite simple, because the initial filter criteria evaluation and the resulting addition of application servers to the signalling path does not only affect the initial SIP request, but all subsequent messages belonging to the same SIP session or transaction. Thus, all these messages will take the same route through the selected IMS-Ass, i.e. in the case of online charging, the IMS-GWF.

As the IMS-GWF acts as online and enhanced CTF it monitors the signalling for the occurrence of chargeable events, i.e. for specific SIP messages and reports them to the OCF 202 over the Ro reference point. The same holds for the MRFC and other IMS-ASs as they directly act as online enhanced CTF.

Fig. 3. depicts the IFC-Adapter. Fig. 3 shows a configuration manager 301, an IMS-GWF (ngCTF) 302, an IFC-Adapter 303 and an S-CSCF 304. It shows the provision of new configurations 305, the notification of the change of the configurations 306 and the provision of adapted initial filter criteria 307. Besides dropping the separation between the IMS-GWF and the S-CSCF, i.e. enhancing the S-CSCF into an adequate online charging CTF, which can be amended according to German patent application 10 2006 051 169.7 for integration in a self-configuring charging system or the general transferring of all SIP signalling traffic from the S-CSCF to the IMS-GWF (this is excluded because of unnecessary overhead), another approach to solve the above-mentioned problem is the demand-driven adaptation of the initial filter criteria, which are installed on the S-CSCFs for the registered users. This is based on the configurations (per product offer) derived for the IMS-GWF (as an ngCTF).

This demand-driven adaptation will be accomplished by a separate functional group, which is called in the following "IFC-adapter" (initial filter criteria-adapter) 303. The initial filter criteria-adapter 303 has an interface to an IMS-GWF (as an ngCTF) 302, by which it is informed about changes in the configuration (IFC-N) and an interface to the S-CSCF 304, by which it can query actually installed initial filter criteria and adapt them (IFC-P).

The procedure is as follows: if new rules for the charging data collection or reporting (charging rules) are provided by the configuration manager, which is responsible for configuring the ngCTFs via the reference point C1, these rules will be transmitted by the IMS-GWF (as an ngCTF) 302 to the IFC-adapter 303 via the IFC-N-Interface.

The IFC-adapter 303 receives these rules and detects with the help of filters (for example IP5-Tupel, SIP-types of communications, contents of SIP-communications in the SIP-header or description or information of the session, etc.) being comprised in the charging rules, which SIP signalling messages of the S-CSCF have to be transmitted to the IMS-GWF in order to enable the respective charging. With the help of the charging rules the initial filter criteria will be derived during this process and an examination takes place, whether the initial filter criteria installed in the S-CSCF 304 already comprise the newly derived ones. Information about the presently installed initial filter criteria will be received via the IFC-P reference point, which is not only intended for intitial filter criteria provisioning, but also for the querying of the already installed initial filter criteria.

If the already installed initial filter criteria are sufficient to provide all the required information to the IMS-GWF by routing of the SIP signalling traffic from the S-CSCF to the IMS-GWF, then the initial filter criteria in the S-CSCF will remain unchanged.

But if the IFC-adapter 303 detects, that messages out of the SIP signalling containing relevant information for the charging data collection and reporting in the IMS-GWF will not be transmitted to the IMS-GWF, there will be a corresponding adjustment or amendment of the initial filter criteria, respectively, which will then be installed on the S-CSCF.

However, if the IFC-adapter 303 detects, that because of the initial filter criteria parts of the SIP signalling traffic unnecessary for the charging data collection and reporting in the IMS-GWF is transmitted to the IMS-GWF, more restrictive initial filter criteria will be derived which will then be installed on the S-CSCF.

As a further embodiment a direct adaptation of the initial filter criteria being part of user profiles in the home subscriber server (HSS) is conceivable. This is implemented according to the configurations (per product offer), which are derived for the IMS-GWF, and this leads subsequently to a communication of the changes to the S-CSCF by the HSS in the case, that already installed initial filter criteria became invalid. There is a reference point between the IFC-adapter and HSS. The provisioning of the initial filter criteria is carried out in this case in the standard manner according to the 3GPP.

The advantages according to the invention are as follows: enabling of the integration of the specified functional groups IMS-GWF and S-CSCF in the self-configuring charging system according to the German patent application 10 2006 051 169.7. Therefore, realization of the advantages of a self-configuration method, i.e.: automatic and therefore quicker and less cost-intensive integration of new detection points in an existing charging-infrastructure, less efforts for deployment- and customization, simpler new-configuration of already existing detection points, for example because of changes of tariff, easier and quicker implementing of new services (shorter time-to-market), as well as quicker adaptation to trends of the market without necessity of an extensive manual configuration.

It should be noted that the term 'comprising' does not exclude other elements or steps and the 'a' or 'an' does not exclude a plurality. Also elements described in association with the different embodiments may be combined.

It should be noted that the reference signs in the claims shall not be construed as limiting the scope of the claims.

### List of reference signs:

- 101: charging trigger functions
- 102: configuration manager
- 103: product offer generation
- 201: S-CSCF
- 202: OCF
- 203: Billing domain
- 301: configuration manager
- 302: IMS-GWF (ngCTF)
- 303: IFC-Adapter
- 304: S-CSCF
- 305: Provision of new configurations
- 306: Notification of change of the configurations
- 307: Provision of adapted initial filter criteria

## Claims

1. Method for online charging, especially in a mobile telecommunication network, comprising:
- enabling the charging for a service or a product by a S-CSCF (201), which comprise a user profile, especially initial filter criteria,
- adapting the user profile, especially the initial filter criteria, according to a change of the tariff.

2. Method for online charging, especially in a mobile telecommunication network, comprising:
- enabling the charging for a service or a product by a S-CSCF (201), whereas a home subscriber server (HSS) comprises a user profile, especially initial filter criteria,
- adapting the user profile, especially the initial filter criteria, according to a change of the tariff.

3. Method according to claim 1 or 2, further comprising
- checking the user profile, especially the initial filter criteria.

4. Method according to one of the previous claims, further comprising
- changing the initial filter criteria, making the initial filter criteria more restrictive or less restrictive, in order to prevent useless messages in the network or to enable transmitting of further messages.

5. System for online charging, especially in a mobile telecommunication network, comprising:
- means for enabling the charging for a service or a product by a S-CSCF (201), which comprises an user profile, especially initial filter criteria,
- means for adapting the user profile, especially the initial filter criteria.

6. System for online charging, especially in a mobile telecommunication network, comprising:
- means for enabling the charging for a service or a product by a S-CSCF (201),
- a home subscriber server (HSS), which comprises a user profile, especially initial filter criteria,
- means for adapting the user profile, especially the initial filter criteria.

7. System according to one of the claims 5 or 6, further comprising
- means for checking the user profile, especially the initial filter criteria.

8. System according to one of the claims 5 to 7, whereas the means for adapting are suitable to change the initial filter criteria, making the initial filter criteria more restrictive or less restrictive, in order to prevent useless messages in the network or to enable transmitting of further messages.

9. System according to one of the claims 5 to 8, whereas the means for adapting comprise an interface to an accounting component, especially CTF (IMS-GWF) (302), or a S-CSCF (201), respectively.

10. Initial filter adapter (303), which is suitable to adapt the user profile, especially the initial filter criteria and is suitable to be used in one of the systems according to claims 5 to 9.
